# EUROPEAN PATENT SPECIFICATION

(11) **EP 3 601 027 B1**
(45) Date of publication and mention of the grant of the patent: **23.06.2021**
(21) Application number: 18712682.6
(22) Date of filing: 19.03.2018
(51) Int. Cl.: B62K 5/08, B62K 5/10, B62K 5/027, B62K 5/05

(54) **MOTOR VEHICLE WITH TWO FRONT STEERING WHEELS AND WITH IMPROVED STEERING MECHANISM**
KRAFTFAHRZEUG MIT ZWEI FRONTLENKRÄDERN UND MIT VERBESSERTEM LENKMECHANISMUS
VÉHICULE À MOTEUR À DEUX ROUES DIRECTRICES AVANT ET À MÉCANISME DE DIRECTION PERFECTIONNÉ

(30) Priority: 20.03.2017 IT 201700030364
(43) Date of publication of application: 05.02.2020
(73) Proprietor: PIAGGIO & C. S.p.A., 56025 Pontedera (Pisa) (IT)
(72) Inventor: RAFFAELLI, Andrea, I-56025 Pontedera (Pisa) (IT); VIANELLO, Alberto, I-56025 Pontedera (Pisa) (IT); MARIOTTI, Valentino, I-56025 Pontedera (Pisa) (IT)
(74) Representative: Mitola, Marco
(86) International application number: PCT/IB2018/051819
(87) International publication number: WO 2018/172908

(56) References cited:
- WO-A1-2017/017639
- CN-A- 106 476 958
- CN-B- 102 336 238
- DE-A1- 3 800 357
- DE-A1-102014 101 087
- US-A1- 2004 032 120
- US-A1- 2016 355 229

## Description

### FIELD OF APPLICATION

The present invention relates to a motor vehicle with two front steering wheels which comprises an improved steering mechanism.

### PRIOR ART

Motor vehicles are known having two front steering and also rolling or tilting wheels, which have a rolling kinematism on the front chassis, typically articulated quadrilateral, which allows tilting on a bend while maintaining a solid support of the front steering wheels on the ground.

The combination of tilting and steering movement makes the steering mechanism quite complex. In fact, it is necessary to ensure the correct steering of the front wheels in all the shaking and rolling conditions of the wheels and the frame. This imposes the construction of steering joints that ensure all the possible rotations of the various rods that make up the kinematic mechanism, so as to allow the correct steering in all driving conditions.

Therefore, a long chain of components and relative tolerances arise which entail risks of steering movements, especially in combined rolling and shaking conditions.

By sliding of a wheel it is meant that the wheel steers differently than expected: for example, in the presence of a hump it can open outwards, causing a reaction of force and angle also on the handlebars DE102014101087A1 discloses the preamble of claim 1.

### DISCLOSURE OF THE INVENTION

The need is therefore felt to provide an improved steering mechanism for motor vehicles with two front steering wheels which at the same time ensures driving precision and reliability over time.

Such a need is met by a motor vehicle according to claim 1.

### DESCRIPTION OF THE DRAWINGS

Further features and the relevant advantages of the present invention will appear more clearly from the following description of preferred non-limiting embodiments thereof, in which:

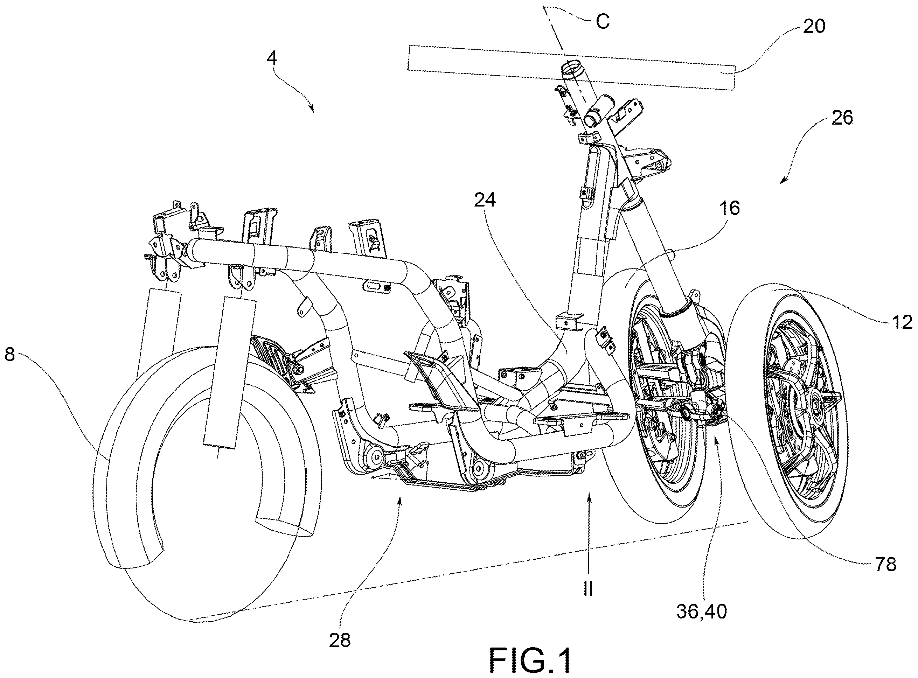

- figure 1 shows a perspective view of a motor vehicle according to an embodiment of the present invention;

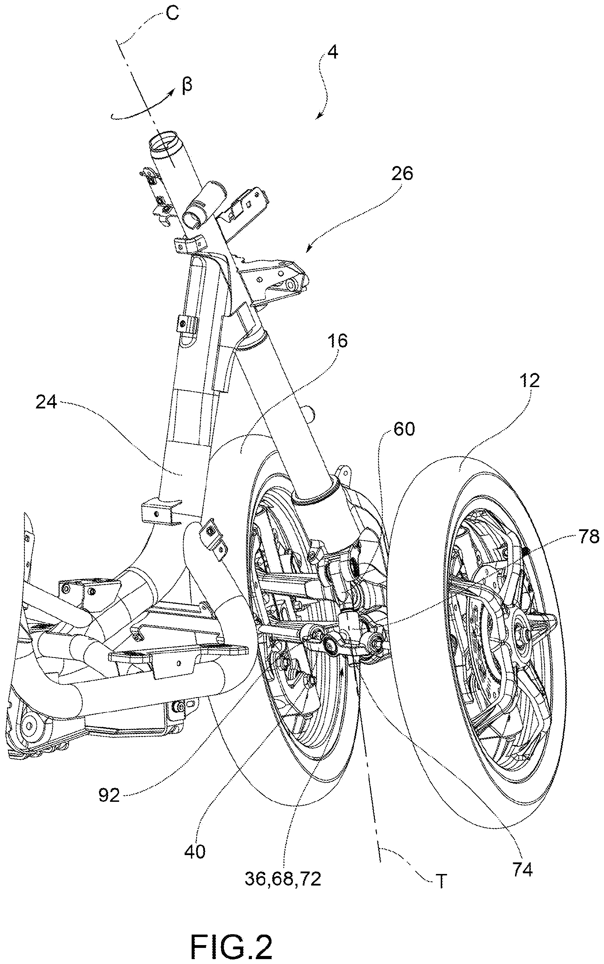

- figure 2 shows the enlarged detail II of figure 1;

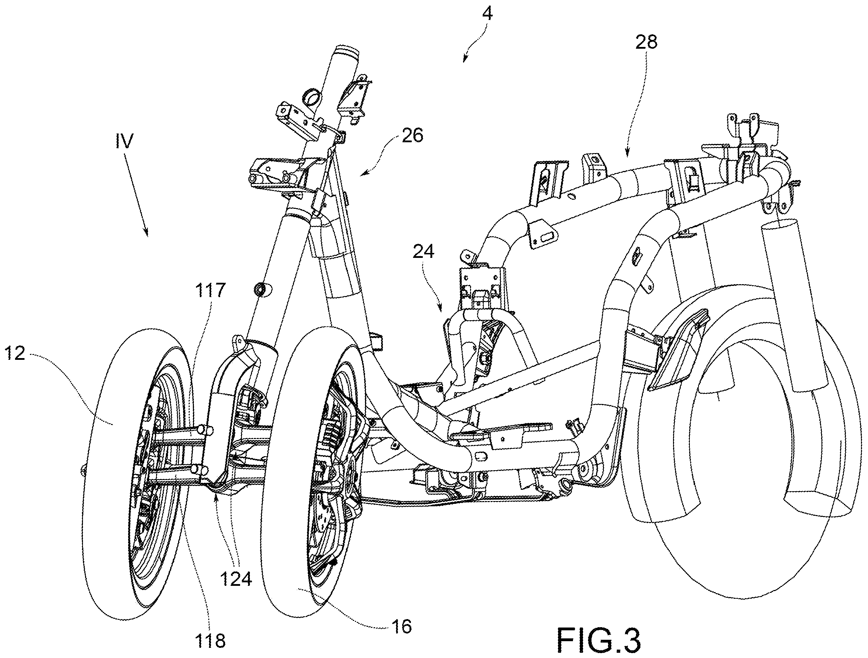

- figure 3 shows a perspective view of a motor vehicle of figure 1 from a different angle;

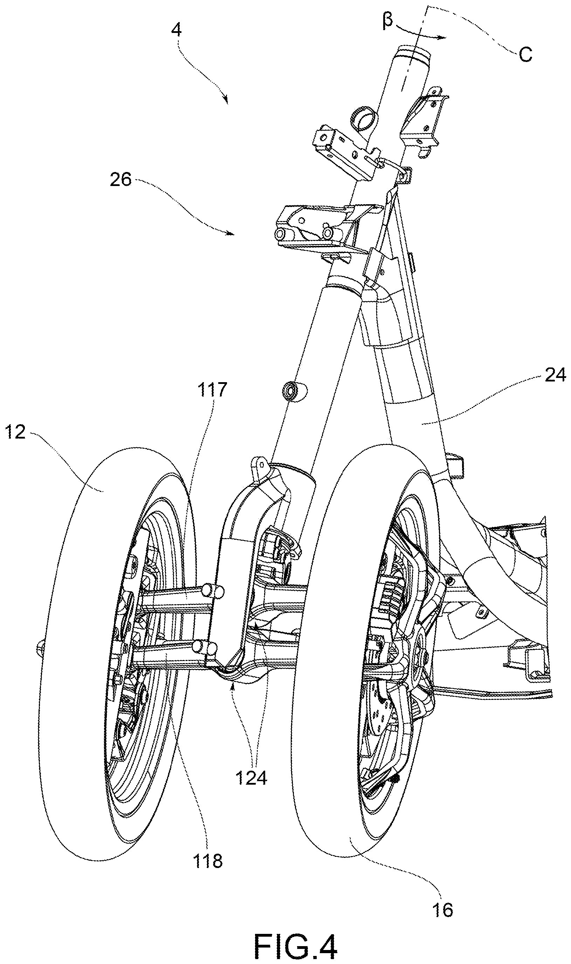

- figure 4 shows the enlarged detail IV in figure 3;

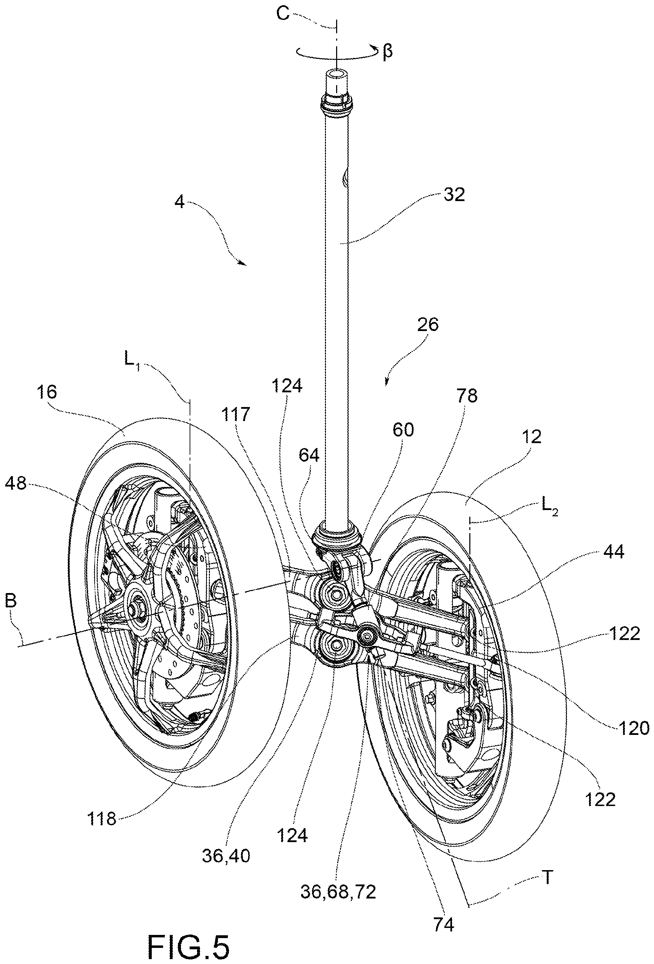

- figure 5 shows a front perspective view of a front frame of a motor vehicle according to the present invention;

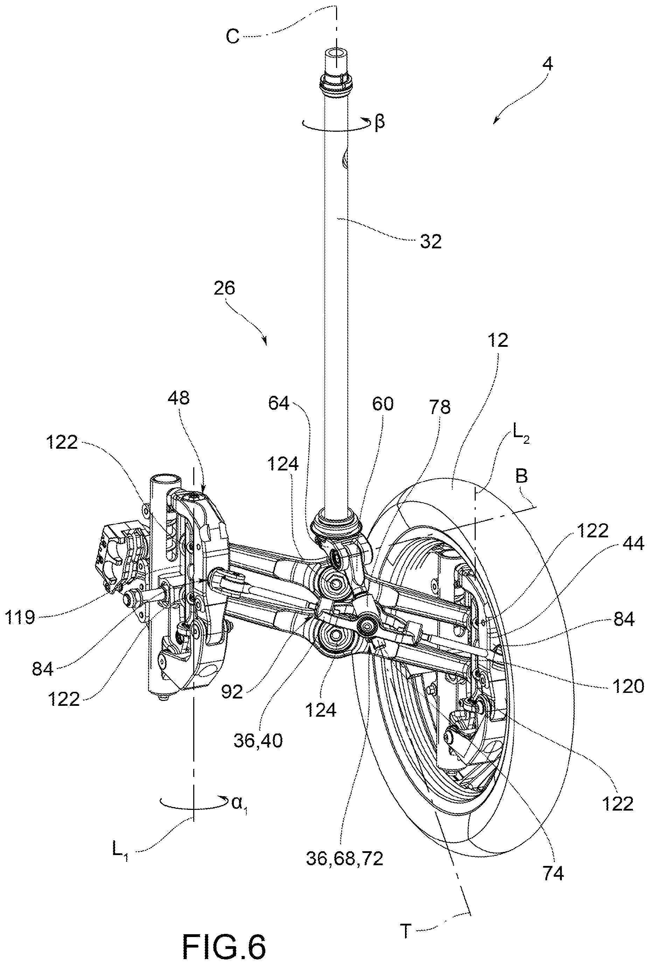

- figure 6 shows the front frame in figure 5 in which a wheel has been omitted to allow the viewing of some internal components;

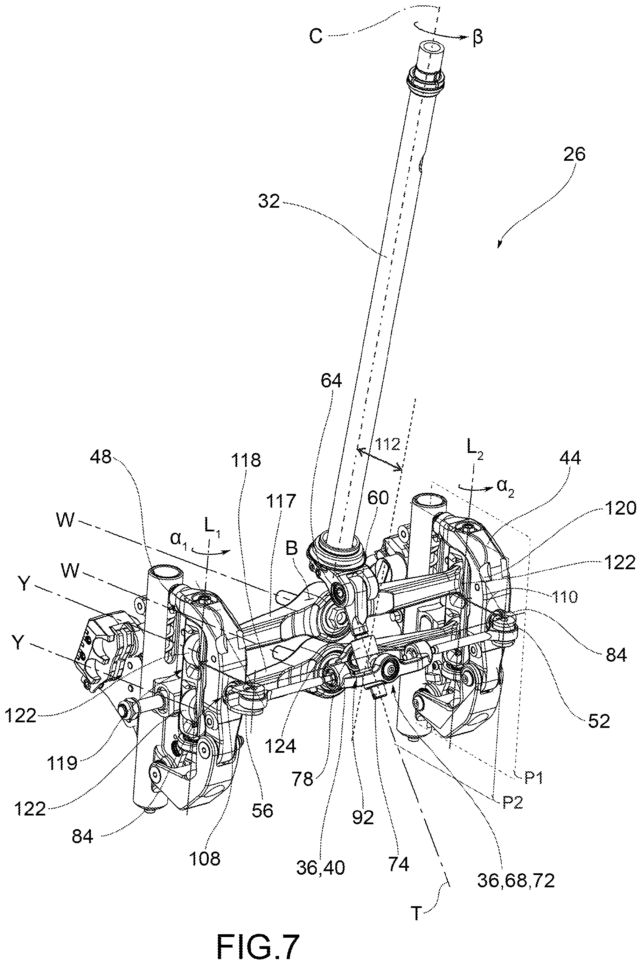

- figure 7 shows a perspective view of a front frame of a motor vehicle according to the present invention, without wheels;

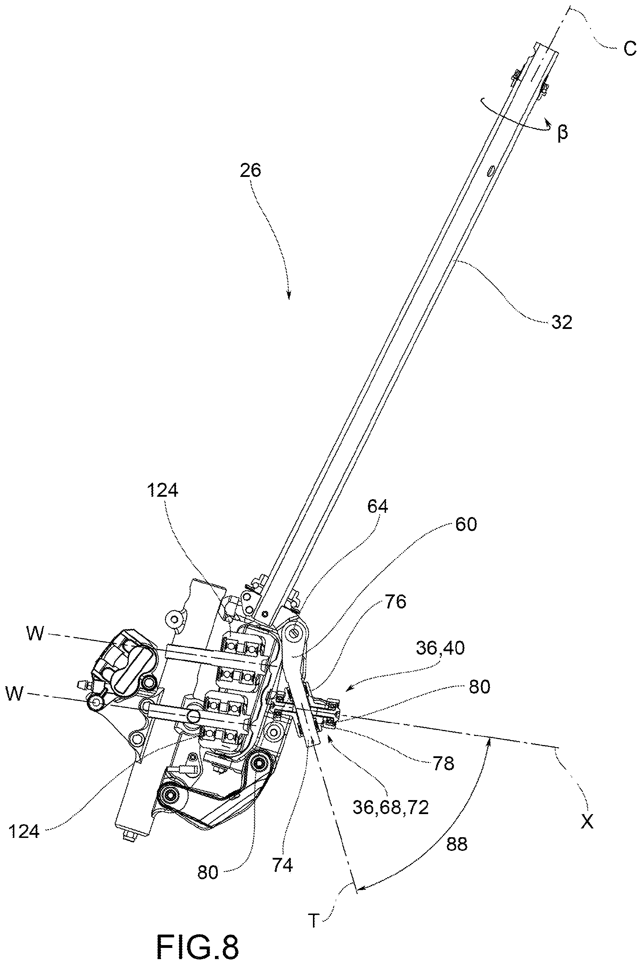

- figure 8 shows a sectional view, along a centreline plane, of the front frame in figure 7;

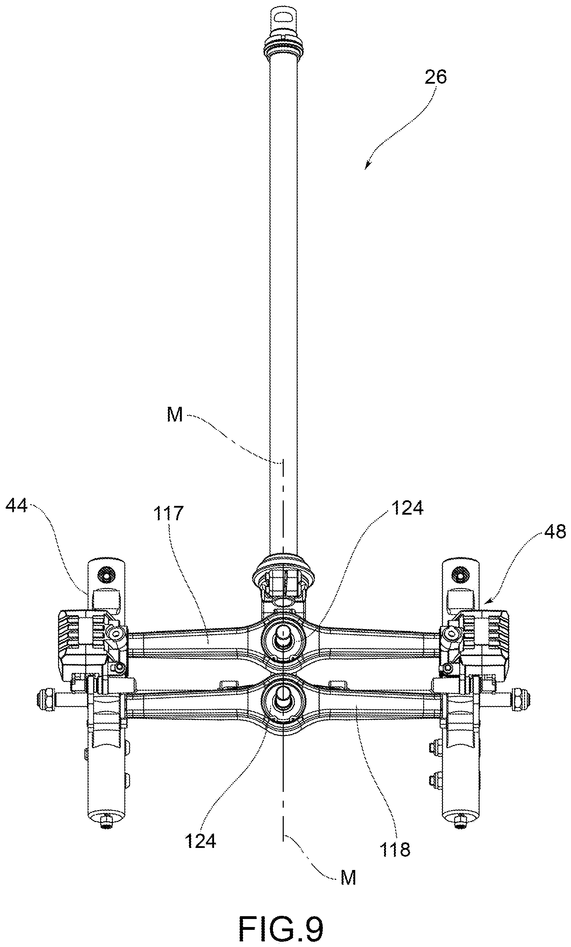

- figure 9 shows a lateral view of the front frame in figure 7 from the side of arrow IX in figure 7;

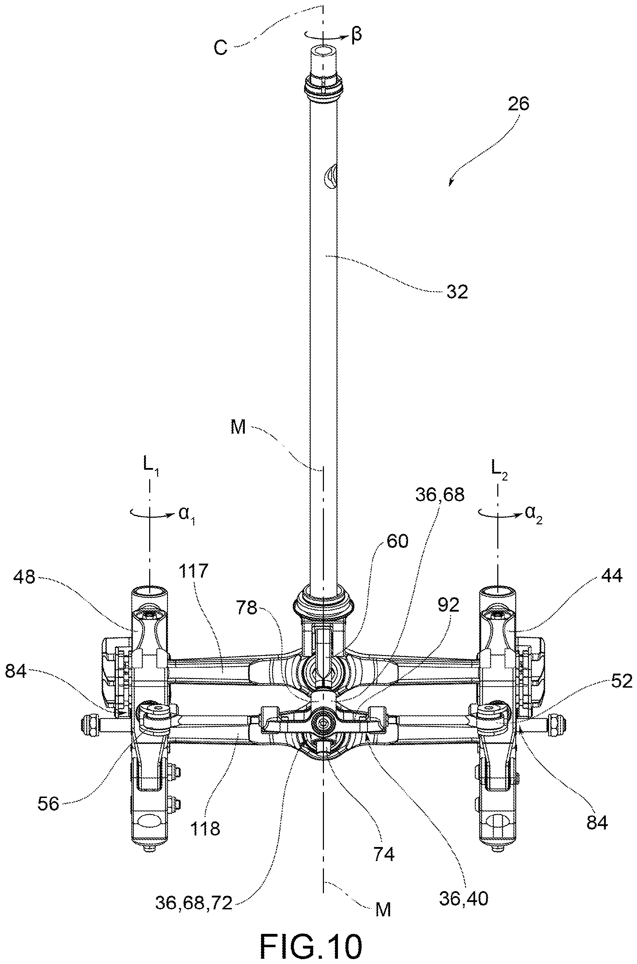

- figure 10 shows a rear view of the front frame in figure 7 from the side of arrow X in figure 7;

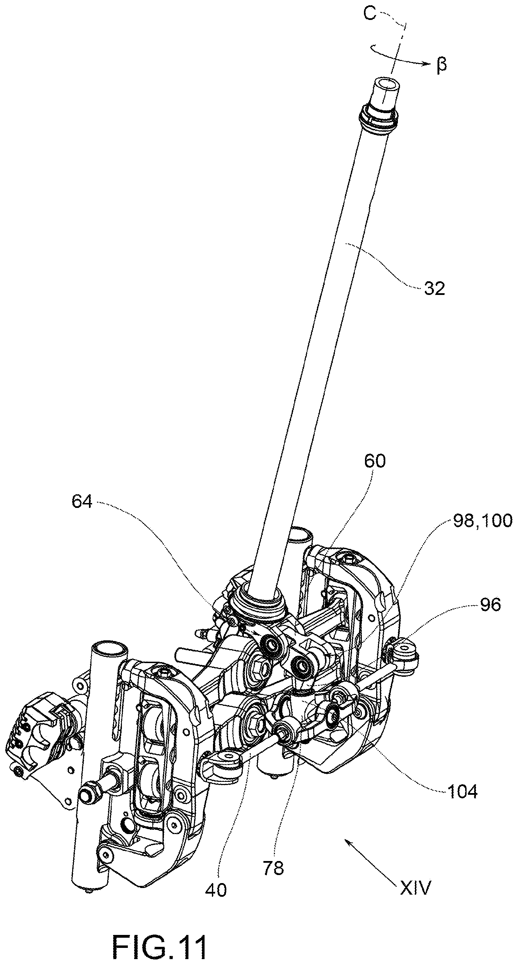

- figure 11 shows a perspective view of a front frame of a motor vehicle according to a further embodiment of the present invention;

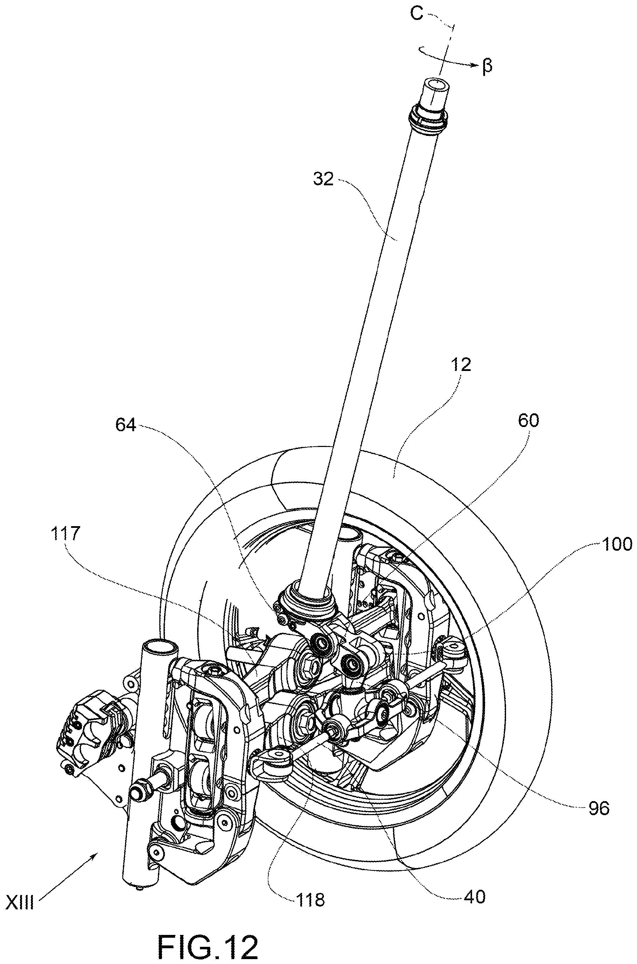

- figure 12 shows a view of the front frame of a motor vehicle in figure 11, with the addition of a wheel;

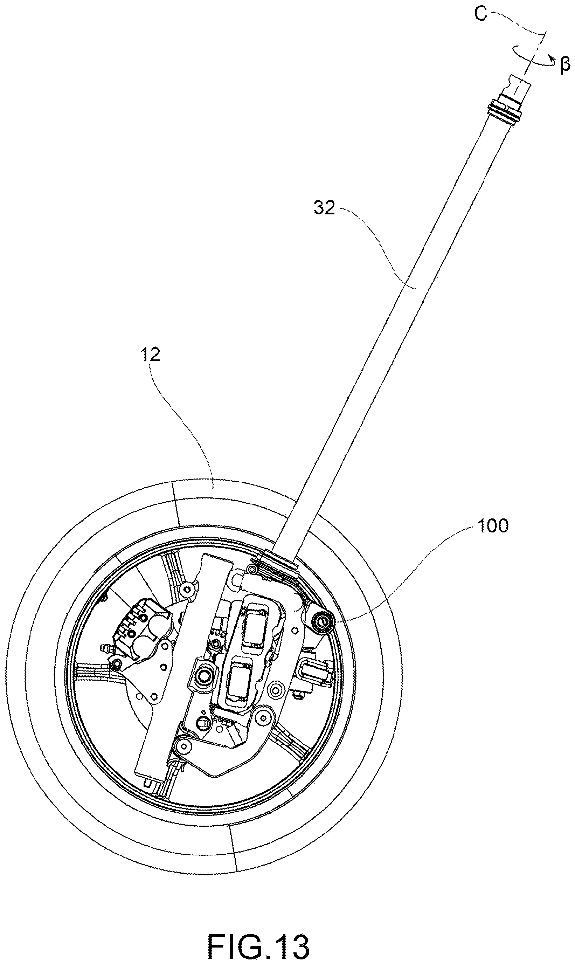

- figure 13 shows a lateral view of the front frame of a motor vehicle in figure 12, from the side of arrow XIII in figure 12;

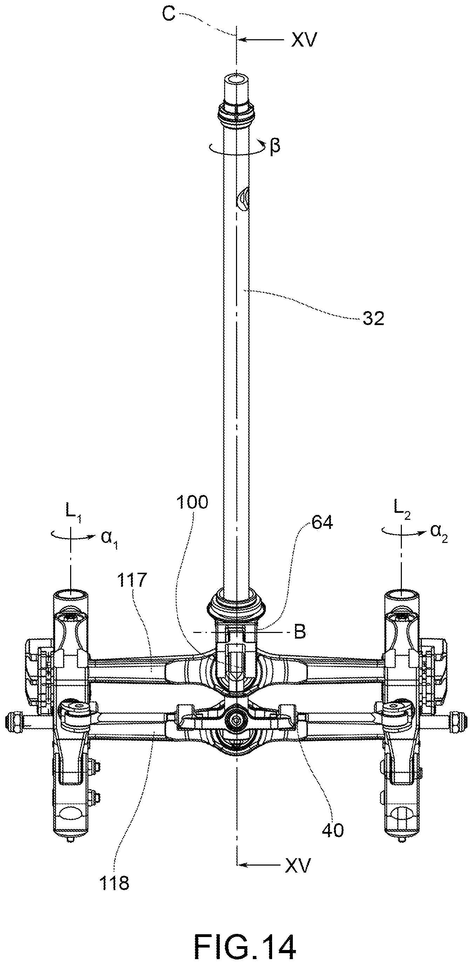

- figure 14 shows a lateral view of the front frame of a motor vehicle in figure 11, from the side of arrow XIV in figure 11;

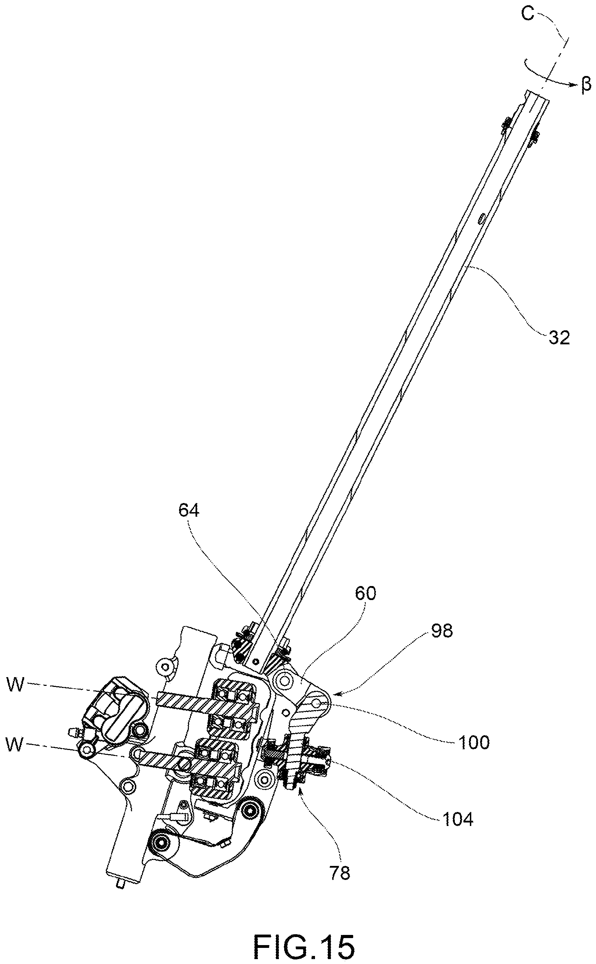

- figure 15 shows a sectional view of the front frame in figure 14, along the section plane XV-XV in figure 14.

Elements or parts of elements in common to the embodiments described below are referred to with the same reference numerals.

### DETAILED DESCRIPTION

With reference to the above figures, reference numeral 4 globally indicates an overall view of a motor vehicle according to the present invention.

Motor vehicle 4 comprises at least one rear wheel 8 and at least two front steering wheels 12, 16 kinematically linked to a handlebar 20.

The motor vehicle 4 comprises a frame 24 which supports a front chassis 26 comprising the front steering wheels 12, 16 and a rear axle 28 comprising a rear swingarm (not shown) supporting the rear wheel 8.

Both the rear swingarm and frame 24 may have any shape, size and may for example be of the lattice type, the box-like type, die-cast, and so on.

Frame 24 may be in one piece or in multiple parts; typically, the portion of frame 24 that interfaces with the rear swingarm 30 supports the driver and/or passenger seat. The rear swingarm 30 may be hinged to said portion of frame 24 of the motor vehicle 4 with respect to at least one hinge pin. It should be noted that the connection between swingarm and frame 24 may be direct, through direct hinging, or it may also be by the interposition of crank mechanisms and/or intermediate frames.

As regards the front frame 26, the front steering wheels 12, 16 are rotatable about respective lateral steering axes L1 and L2, according to lateral steering angles α1, α2.

The handlebar 20 is in turn rotatable according to a central steering angle β about a central steering axis C.

The front steering wheels 12, 16 are kinematically connected to the handlebar 20 by transmission means 36 that realise a transmission ratio T defined by the ratio between the lateral steering angles α1, α2 and the central steering angle β. Advantageously, the transmission means 36 comprise a steering bar 40, kinematically connected to handlebar 20, which directly links the front steering wheels 12, 16.

According to an embodiment, the transmission means 36 comprise two lateral steering supports 44, 48, each kinematically connected to a corresponding front wheel 12, 16, in which the steering bar 40 is pivoted to said lateral steering supports 44, 48 at respective lateral hinges 52, 56.

The lateral steering supports 44, 48 comprise hinges which define said lateral steering axes L1, L2.

Advantageously, the transmission means 36 comprise at least a first connecting rod 60 which rotatably connects a centerline M of the steering bar 40 with the steering column 32, around the central steering axis C.

The first connecting rod 60 is hinged through a first pivoting hinge 64 about a pivoting axis B-B rotating integrally with the handlebar 20, lying on a plane perpendicular to the central steering axis C.

In other words, the first pivoting hinge 64 does not have a fixed position but rotates together with the steering column 32 by a central steering angle β around the central steering axis C.

According to an embodiment, the first pivoting hinge 64 is shaped so as to define a pivoting axis B-B lying on a plane perpendicular to the central steering axis C, spaced by a pitch and not incident with the central steering axis C.

According to a further possible embodiment, the first pivoting hinge 64 is shaped so as to define a pivoting axis B-B lying on a plane perpendicular to the central steering axis C and incident with the central steering axis C.

The transmission means 36 comprise relative roto-translation means 68 between the first connecting rod 60 and the steering bar 40, along an articulation direction T-T, so as to allow the rotation and mutual translation between the steering bar 40 and the first pivoting hinge 64.

For example, the roto-translation means 68 comprise a cylindrical joint 72, having a cylindrical end 74, integral with the first connecting rod 60 and inserted, according to a roto-translatory coupling, in a counter-shaped cylindrical cavity 76, inclined according to said articulation direction T-T.

For example, said cylindrical cavity 76 is formed within a bushing 78 hinged to the steering bar 40.

According to an embodiment, the cylindrical joint 72 is provided with bearings 80 adapted to promote the roto-translation between the cylindrical end 74 and the cylindrical cavity 76.

For example, such bearings 80 may comprise low friction coefficient rollers and/or bushes.

In particular, the cylindrical joint 72 must allow both the translation, parallel to the articulation direction T-T, and the rotation about the same articulation direction T-T, between the steering bar 40 and the first connecting rod 60. This kinematic connection with two degrees of freedom is obtained by the coupling between the cylindrical end 74 and the cylindrical cavity 76; the cylindrical geometry allows in fact the relative rotation, while the sliding allows the relative translation between the parts. The amount of relative sliding and translation depends on the steering, rolling and shaking configurations of the wheels.

The bushing 78 is hinged at a centerline M of the steering bar 40 along a central hinge axis X-X, perpendicular to the steering bar 40.

The central steering axis X-X is parallel to lateral hinge axes Y-Y, Y-Y defined by lateral rotation hinges 84 that connect the steering bar 40 to the lateral steering supports 44, 48.

Preferably, the roto-translation means (68) are shaped so that the articulation direction T-T defines with the central hinge axis X-X an articulation angle 88 of between 15 and 90 degrees. The end values of the range are included.

According to an embodiment, said articulation angle is between 15 and 35 degrees. Preferably, said articulation angle 88 is equal to 25 degrees.

In particular, these angular values ensure that the relative translation of the roto-translation means 68, for example between the cylindrical end 74 and the cylindrical cavity 76, is very contained, of the order of a few millimetres: in this way, the wear is extremely limited if compared to known solutions.

The bushing 78 is inserted within a bifurcation 92 formed at a centerline M of the steering bar 40 so as to cross the steering bar itself.

According to a further embodiment, the rototranslation means 68 comprise a second connecting rod 96 having a first end 98 hinged to the first connecting rod 60, by means of a second pivoting hinge 100, parallel to the first pivoting hinge 64, and a second end 104 hinged to the bushing 78 in turn hinged to the steering bar 40.

According to an embodiment, the transmission ratio T between the front steering wheels 12, 16 and handlebar 20 is variable as the central steering angle β of handlebar 20 varies.

According to an embodiment, said transmission ratio T is maximum in proximity of a central position of handlebar 20, for a null central steering angle β, and decreases as the rotation of handlebar 20 increases with respect to said central position.

According to a possible embodiment, said transmission ratio T is substantially unitary in correspondence of a central steering angle β greater than 40 degrees.

According to an embodiment, the lateral steering supports 44, 48 define lateral steering arms 108, 110 equal to each other, wherein the steering bar 40 is shaped so as to intercept a central steering arm 112 having less length with respect to the lateral steering arms 108, 110.

The lateral steering arms 108, 110 are the distance between each lateral steering axis L1, L2 and the corresponding lateral hinge 52, 56, while the central steering arm 112 is the distance between the roto-translation means 68 and the central steering axis C, said distances being measured on a projection plane perpendicular to the central steering axis.

Preferably, in a configuration with straight front steering wheel, 12, 16, the lateral steering arms 108, 110 are greater than the central steering arm 112.

This allows achieving the condition whereby the transmission ratio T is maximum in proximity of a central position of handlebar 20, for a null central steering angle β, and decreases as the rotation of handlebar 20 increases with respect to said central position.

As mentioned above, the motor vehicle 4 is tilting and comprises, on the front chassis 26, an articulated quadrilateral structure, comprising a pair of top and bottom crosspieces 117, 118 connected at the ends by uprights 119, 120 by means of lateral rolling hinges 122 that define lateral rolling axes Y-Y parallel to one another.

The top and bottom crosspieces 117, 118 are in turn hinged at a centerline to the frame 24 by means of central rolling hinges 124 that define central rolling axes W-W, parallel to one another.

Preferably, the lateral rolling axes Y-Y and the central rolling axes W-W are parallel to one another.

As can be appreciated from the description, the present invention allows overcoming the drawbacks of the prior art.

In particular, the invention allows obtaining a steering kinematism which has driving precision and reliability over time.

In fact, due to the described configuration, on the one hand it is possible to drive the wheels in a precise manner and on the other hand, large sliding is avoided, with particular reference to the roto-translation means.

This limits the wear of the steering mechanism.

Moreover, the present invention allows avoiding or in any case limiting the use of spherical articulations and making the steering less sensitive from the actual geometry of the pieces.

Moreover, the present invention allows limiting the wheel sliding, i.e. the divergences between the theoretical steering imposed by the steering and the actual steering of the individual wheels.

Moreover, the present invention allows having the maximum decoupling between the steering, rolling and compression motions of the suspensions and therefore of the wheels.

For this purpose, the steering bar is in one piece and is hung from the transverse ends near the steering wheels. Its movement with respect to a vertical centerline plane of the vehicle can be achieved by using a first and a second connecting rod, or by using a first connecting rod and the roto-translation means, such as the cylindrical hinge with a sliding element.

In other words, in the first case 2 segments (connecting rods) are used of fixed length with 2 variable angles (one in the connection on the steering column and the other one included between the segments themselves. In the second case, only one segment of variable length is used, (i.e. the sliding with cylindrical end), coupled to the steering column by a variable angle.

It is also possible, as seen, to change the steering ratio with a kinematic mechanism which makes it closer to the unit (and thus stiffening it if soft around zero, or with straight wheels, and vice versa).

In particular, this is important in case of down-steering to avoid rotating the handlebar too much during a u-turn, which could be ergonomically unfavourable and impose constraints to the vehicle coatings/fairings.

Operationally, it was found that the driver experiences a significant improvement in the perceived agility of the motor vehicle with down-steering which reduces the effort on the handlebar with equal angle of rotation of the wheel.

The present invention therefore also allows varying the steering ratio of the handlebar automatically and efficiently, without expensive and complex mechanisms to be implemented.

This also prevents weighing down the front frame of the motor vehicle.

The variable down-steering can also lighten the handlebar near the zero, to then tend to a steering ratio close to the unit as the steering angle increases.

In this way close to zero, that is, with the wheels substantially straight, a lightening of the steering wheel is obtained which makes driving more comfortable, without requiring excess effort on the handlebar.

Moreover, when the angle of the handlebar is significantly increased with respect to the central position, the variation in the steering ratio decreases the down-steering, almost to the direct ratio, so as to avoid interference between the handlebar and parts of the chassis and/or hull of the vehicle.

In other words, a variable steering ratio is achieved which allows having the advantages of down-steering in terms of comfort, avoiding the drawbacks thereof in terms of size.

Also, as the steering angle increases, the same stiffens, since he down-steering is automatically reduced. In this way, the steering sensitivity and stiffness increase when one needs them most, that is, when dealing with a curve.

The motor vehicle according to the present invention ensures comfort and driving precision, without raising costs, weights and overall dimensions of the steering device.

A man skilled in the art may make several changes and adjustments to the devices described above in order to meet specific and incidental needs, all falling within the scope of protection defined in the following claims.

## Claims

1. Motor vehicle (4), comprising:
- at least one rear wheel (8), at least two front steering wheels (12, 16) and a handlebar (20),
- the front wheels (12, 16) being rotatable around respective lateral steering axes (L1, L2) according to lateral steering angles α1, α2), the handlebar (20) being according to a central steering angle (β) around a column (32) defining a central steering axis (C),
- the front steering wheels (12, 16) being kinematically connected to the handlebar (20) by means of transmission means (36) that comprise a steering bar (40), pivoted, at lateral hinges (52, 56), to two lateral steering supports (44, 48), each kinematically connected to a corresponding front wheel (12, 16),
- the transmission means (36) comprise moreover:
- a first pivoting hinge (64) associated to the column (32), and
- a second pivoting hinge (78) perpendicular to the first pivoting hinge (64) associated to the at least one steering bar (40),
- wherein said transmission means (36) allow the rotation and mutual translation between the at least one steering bar (40) and the first pivot thinge (64), **characterized by** a cylindrical joint (72), interposed between the first pivoting hinge (64) and the second pivoting hinge (78).

2. Motor vehicle (4) according to claim 1, wherein it is provided at least a first connecting rod (60) which rotatably connects a centerline (M-M) of the steering bar (40) with the steering column (32), around the central steering axis (C),
- the first connecting rod (60) being hinged through said first pivoting hinge (64) about a pivoting axis (B-B) rotating integrally with the handlebar, lying on a plane perpendicular to the central steering axis (C).

3. Motor vehicle (4) according to claim 2, wherein a roto-translation means (68) comprises said cylindrical joint (72) having a cylindrical end (74), integral with the first connecting rod (60) and inserted, according to a roto-translatory coupling, in a counter-shaped cylindrical cavity (76), inclined according to an articulation direction (T-T), formed within a bushing (78) hinged to the steering bar (40).

4. Motor vehicle (4) according to claim 3, wherein the cylindrical joint (72) is provided with bearings (80) adapted to promote the roto-translation between the cylindrical end (74) and the cylindrical cavity (76).

5. Motor vehicle (4) according to claim 3 or 4, wherein said bushing (78) is hinged at the centerline (M-M) of the steering bar (40) along a central hinge axis (X-X) perpendicular to the steering bar (40).

6. Motor vehicle (4) according to claim 5, wherein said central steering axis (X-X) is parallel to lateral hinge axes (Y-Y, Y-Y) defined by lateral rotation hinges (84) that connect the steering bar (40) to the lateral steering supports (44, 48).

7. Motor vehicle (4) according to claim 5 or 6, wherein the roto-translation means (68) are shaped so that the articulation direction (T-T) forms with the central hinge axis (X-X) an articulation angle (88) of between 15 and 90 degrees.

8. Motor vehicle (4) according to claim 7, wherein said articulation angle (88) is of between 15 and 35 degrees.

9. Motor vehicle (4) according to claim 7 or 8, wherein said articulation angle (88) is equal to 25 degrees.

10. Motor vehicle (4) according to any one of claims 3 to 9, wherein the bushing (78) is inserted within a bifurcation (92) formed at the centerline (M-M) of the steering bar (40) so as to cross the steering bar (40).

11. Motor vehicle (4) according to any one of preceding claims, wherein the first pivoting hinge (64) is shaped so as to define a pivoting axis (B-B) lying on a plane perpendicular to the central steering axis (C), spaced by a pitch and not incident with the central steering axis (C).

12. Motor vehicle (4) according to any one of claims 3 to 10, wherein the first pivoting hinge (64) is shaped so as to define pivoting axis is defined before pivoting axis (B-B) lying on a plane perpendicular to the central steering axis (C) and incident with the central steering axis (C).

13. Motor vehicle (4) according to any one of the claims 3 to 10 or 12, wherein the roto-translation means (68) comprise a second connecting rod (96) having a first end (98) hinged to the first connecting rod (60), by means of a second pivoting hinge (100), parallel to the first pivoting hinge (64), and a second end (104) hinged to a bushing (78) in turn hinged to the steering bar (40).

14. Motor vehicle (4) according to any one of the claims 3 to 10 and 12 to 13, wherein the lateral steering supports (44, 48) define lateral steering arms (108, 110) equal to each other, wherein the steering bar (40) is shaped so as to intercept a central steering arm (112) having a smaller length than the lateral steering arms (108, 110), said lateral steering arms (108, 110) being defined as the distance between each lateral steering axis (L1 , L2) and the corresponding lateral hinge (52, 56), said central steering arm (112) being defined as the distance between the roto-translation means (68) and the central steering axis (C).

15. Motor vehicle (4) according to claim 14, wherein the lateral steering arms (108, 110), with front steering wheels (12, 16) in straight configuration, are greater than the central steering arm (112).

16. Motor vehicle (4) according to claim 14 or 15, wherein the central kinematics (62) is shaped so as to vary the length of the central steering arm (112) as the central steering angle (β) varies.

17. Motor vehicle (4) according to any one of the preceding claims, wherein the motor vehicle (4) comprises, on the front chassis (26), an articulated quadrilateral structure, comprising a pair of top and bottom crosspieces (117, 118) connected at the ends by uprights (119, 120) by means of lateral rolling hinges (122) that define lateral rolling axes (Y-Y) parallel to one another.

18. Motor vehicle (4) according to claim 17, wherein the top and bottom crosspieces (117, 118) are in turn hinged at a centerline to the frame (24) by means of central rolling hinges (124) that define central rolling axes (W-W), parallel to one another.

19. Motor vehicle (4) according to claim 18, wherein the lateral rolling axes (Y-Y) and the central rolling axes (W-W) are parallel to one another.

## Patentansprüche

1. Kraftfahrzeug (4), umfassend:
- zumindest ein Hinterrad (8), zumindest zwei vordere Lenkräder (12, 16) und einen Lenker (20),
- wobei die Vorderräder (12, 16) um jeweilige laterale Lenkachsen (L1, L2) gemäß lateraler Lenkwinkel (α1, α 2) drehbar sind, wobei der Lenker (20) gemäß einem zentralen Lenkwinkel (β) um eine Säule (32) herum, die eine zentrale Lenkachse (C) definiert,
- wobei die vorderen Lenkräder (12, 16) kinematisch mit dem Lenker (20) mittels Übertragungsmittel (36) verbunden sind, die eine Lenkstange (40) umfassen, die an lateralen Scharnieren (52, 56) an zwei laterale Lenkunterstützungen bzw. - stützen (44, 48) angelenkt ist, die jeweils kinematisch mit einem entsprechenden Vorderrad (12, 16) verbunden sind,
- wobei die Übertragungsmittel (36) ferner umfassen:
- ein erstes Schwenkscharnier (64), das der Säule (32) zugeordnet ist, und
- ein zweites Schwenkscharnier (78) senkrecht zu dem ersten Schwenkscharnier (64), das der zumindest einen Lenkstange (40) zugeordnet ist;
- wobei die Übertragungsmittel (36) die Drehung und gegenseitige Translation bzw. Verschiebung zwischen der zumindest einen Lenkstange (40) und dem ersten Schwenkscharnier (64) erlauben, **gekennzeichnet durch** ein zylindrisches Gelenk (72), das zwischen dem ersten Schwenkscharnier (64) und dem zweiten Schwenkscharnier (78) angeordnet ist.

2. Kraftfahrzeug (4) nach Anspruch 1, wobei zumindest eine erste Verbindungs- bzw. Pleuelstange (60) bereitgestellt ist, die eine Mittellinie (M-M) der Lenkstange (40) drehbar mit der Lenksäule (32) um die zentrale Lenkachse (C) herum verbindet,
- wobei die erste Verbindungsstange (60) durch das erste Schwenkscharnier (64) um eine Schwenkachse (B-B) angelenkt ist, die sich integral bzw. einstückig mit dem Lenker dreht, und zwar auf einer Ebene senkrecht zu der zentralen Lenkachse (C) liegend.

3. Kraftfahrzeug (4) nach Anspruch 2, wobei ein Rototranslationsmittel (68) das zylindrische Gelenk (72) mit einem zylindrischen Ende (74) umfasst, das integral bzw. einstückig mit der ersten Verbindungsstange (60) ist und gemäß einer rototranslatorischen Kopplung in einen gegenläufig geformten zylindrischen Hohlraum (76) eingesetzt ist, der gemäß einer Anlenkungs- bzw. Gelenkrichtung (T-T) geneigt ist, und zwar ausgebildet in einer Buchse (78), die an der Lenkstange (40) angelenkt ist.

4. Kraftfahrzeug (4) nach Anspruch 3, wobei das zylindrische Gelenk (72) mit Lagern (80) versehen ist, die angepasst sind, um die Rototranslation zwischen dem zylindrischen Ende (74) und dem zylindrischen Hohlraum (76) zu fördern.

5. Kraftfahrzeug (4) nach Anspruch 3 oder 4, wobei die Buchse (78) an der Mittellinie (M-M) der Lenkstange (40) entlang einer zentralen Scharnierachse (X-X) senkrecht zu der Lenkstange (40) angelenkt ist.

6. Kraftfahrzeug (4) nach Anspruch 5, wobei die zentrale Lenkachse (X-X) parallel zu lateralen Scharnierachsen (Y-Y, Y-Y) ist, die durch laterale Drehscharniere (84) definiert sind, welche die Lenkstange (40) mit den lateralen Lenkstützen (44, 48) verbinden.

7. Kraftfahrzeug (4) nach Anspruch 5 oder 6, wobei das Rototranslationsmittel (68) so geformt ist, dass die Gelenkrichtung (T-T) mit der zentralen Scharnierachse (X-X) einen Gelenkwinkel (88) zwischen 15 und 90 Grad bildet.

8. Kraftfahrzeug (4) nach Anspruch 7, wobei der Gelenkwinkel (88) zwischen 15 und 35 Grad beträgt.

9. Kraftfahrzeug (4) nach Anspruch 7 oder 8, wobei der Gelenkwinkel (88) gleich 25 Grad ist.

10. Kraftfahrzeug (4) nach einem der Ansprüche 3 bis 9, wobei die Buchse (78) in eine Gabelung (92) eingesetzt ist, die an der Mittellinie (M-M) der Lenkstange (40) ausgebildet ist, um die Lenkstange (40) zu kreuzen.

11. Kraftfahrzeug (4) nach einem der vorhergehenden Ansprüche, wobei das erste Schwenkscharnier (64) so geformt ist, dass es eine Schwenkachse (B-B) definiert, die auf einer Ebene senkrecht zu der zentralen Lenkachse (C) liegt, und zwar beabstandet durch eine Steigung und nicht mit der zentralen Lenkachse (C) einfallend bzw. zusammenfallend.

12. Kraftfahrzeug (4) nach einem der Ansprüche 3 bis 10, wobei das erste Schwenkscharnier (64) so geformt ist, dass es die Schwenkachse definiert, die vor der Schwenkachse (B-B) definiert wird, die auf einer Ebene senkrecht zu der zentralen Lenkachse (C) und einfallend bzw. zusammenfallend mit der zentralen Lenkachse (C) liegt.

13. Kraftfahrzeug (4) nach einem der Ansprüche 3 bis 10 oder 12, wobei das Rototranslationsmittel (68) eine zweite Verbindungs- bzw. Pleuelstange (96) mit einem ersten Ende (98), das an der ersten Verbindungsstange (60) mittels eines zweiten Schwenkscharniers (100) parallel zu dem ersten Schwenkscharnier (64) angelenkt ist, und einem zweiten Ende (104) umfasst, das an einer Buchse (78) angelenkt ist, die wiederum an der Lenkstange (40) angelenkt ist.

14. Kraftfahrzeug (4) nach einem der Ansprüche 3 bis 10 und 12 bis 13, wobei die lateralen Lenkstützen (44, 48) laterale Lenkarme (108, 110) definieren, die einander gleich sind, wobei die Lenkstange (40) so geformt ist, dass sie einen zentralen Lenkarm (112) mit einer geringeren Länge als die lateralen Lenkarme (108, 110) abfängt, wobei die lateralen Lenkarme (108, 110) als der Abstand zwischen jeder lateralen Lenkachse (L1, L2) und dem entsprechenden lateralen Scharnier (52, 56) definiert sind, wobei der zentrale Lenkarm (112) als der Abstand zwischen dem Rototranslationsmittel (68) und der zentralen Lenkachse (C) definiert ist.

15. Kraftfahrzeug (4) nach Anspruch 14, wobei die lateralen Lenkarme (108, 110) mit vorderen Lenkrädern (12, 16) in gerader Konfiguration größer sind als der zentrale Lenkarm (112).

16. Kraftfahrzeug (4) nach Anspruch 14 oder 15, wobei die zentrale Kinematik (62) so geformt ist, dass die Länge des zentralen Lenkarms (112) mit variierendem zentralen Lenkwinkel (β) variiert.

17. Kraftfahrzeug (4) nach einem der vorhergehenden Ansprüche, wobei das Kraftfahrzeug (4) an dem Frontfahrgestell (26) eine Gelenkviereckstruktur umfasst, die ein Paar obere und untere Querstücke (117, 118) umfasst, die an den Enden durch Pfosten (119, 120) mittels lateraler Rollscharniere (122) verbunden sind, die laterale Rollachsen (Y-Y) parallel zueinander definieren.

18. Kraftfahrzeug (4) nach Anspruch 17, wobei die oberen und unteren Querstücke (117, 118) wiederum an einer Mittellinie an den Rahmen (24) mittels zentraler Rollscharniere (124) angelenkt sind, die zentrale Rollachsen (W-W) parallel zueinander definieren.

19. Kraftfahrzeug (4) nach Anspruch 18, wobei die lateralen Rollachsen (Y-Y) und die zentralen Rollachsen (W-W) parallel zueinander sind.

## Revendications

1. Véhicule à moteur (4), comprenant :
- au moins une roue arrière (8), au moins deux roues directrices avant (12, 16) et un guidon (20),
- les roues avant (12, 16) pouvant tourner autour d'axes de direction latéraux respectifs (L1, L2) selon des angles de direction latéraux (α1, a2), le guidon (20) étant selon un angle de direction central (β) autour d'une colonne (32) définissant un axe de direction central (C),
- les roues directrices avant (12, 16) étant reliées de manière cinématique au guidon (20) à l'aide de moyens de transmission (36) qui comprennent une barre de direction (40), pivotée, au niveau d'articulations latérales (52, 56), vers deux supports de direction latéraux (44, 48), chacun étant relié de manière cinématique à une roue avant correspondante (12, 16),
- les moyens de transmission (36) comprennent de plus :
- une première articulation pivotante (64) associée à la colonne (32), et
- une seconde articulation pivotante (78) perpendiculaire à la première articulation pivotante (64) et associée à la barre de direction (40), au moins au nombre de une,
- dans lequel lesdits moyens de transmission (36) permettent la rotation et la translation mutuelle entre la barre de direction (40), au moins au nombre de une, et la première articulation pivotante (64), **caractérisé par** un assemblage cylindrique (72), interposé entre la première articulation pivotante (64) et la seconde articulation pivotante (78).

2. Véhicule à moteur (4) selon la revendication 1, dans lequel il est prévu au moins une première bielle (60) qui relie de façon à pouvoir tourner une ligne centrale (M-M) de la barre de direction (40) à la colonne de direction (32), autour de l'axe de direction central (C),
- la première bielle (60) étant articulée via ladite première articulation pivotante (64) autour d'un axe pivotant (B-B) tournant d'un seul tenant avec le guidon, et reposant sur un plan perpendiculaire à l'axe de direction central (C).

3. Véhicule à moteur (4) selon la revendication 2, dans lequel un moyen de roto-translation (68) comprend ledit assemblage cylindrique (72) présentant une extrémité cylindrique (74), d'un seul tenant avec la première bielle (60) et insérée, selon un couplage roto-translatoire, dans une cavité cylindrique contre-formée (76), inclinée selon une direction d'articulation (T-T), formée dans une bague (78) articulée à la barre de direction (40).

4. Véhicule à moteur (4) selon la revendication 3, dans lequel l'assemblage cylindrique (72) est doté de roulements (80) adaptés pour faciliter la roto-translation entre l'extrémité cylindrique (74) et la cavité cylindrique (76).

5. Véhicule à moteur (4) selon la revendication 3 ou 4, dans lequel ladite bague (78) est articulée au niveau de la ligne centrale (M-M) de la barre de direction (40) le long d'un axe d'articulation central (X-X) perpendiculaire à la barre de direction (40).

6. Véhicule à moteur (4) selon la revendication 5, dans lequel ledit axe de direction central (X-X) est parallèle aux axes d'articulation latéraux (Y-Y, Y-Y) définis par des articulations de rotation latérales (84) qui relient la barre de direction (40) aux supports de direction latéraux (44, 48).

7. Véhicule à moteur (4) selon la revendication 5 ou 6, dans lequel les moyens de roto-translation (68) sont formés de façon à ce que la direction d'articulation (T-T) forme avec l'axe d'articulation central (X-X) un angle d'articulation (88) compris entre 15 et 90 degrés.

8. Véhicule à moteur (4) selon la revendication 7, dans lequel ledit angle d'articulation (88) est compris entre 15 et 35 degrés.

9. Véhicule à moteur (4) selon la revendication 7 ou 8, dans lequel ledit angle d'articulation (88) est égal à 25 degrés.

10. Véhicule à moteur (4) selon l'une quelconque des revendications 3 à 9, dans lequel la bague (78) est insérée dans une bifurcation (92) formée au niveau de la ligne centrale (M-M) de la barre de direction (40) de façon à croiser la barre de direction (40).

11. Véhicule à moteur (4) selon l'une quelconque des revendications précédentes, dans lequel la première articulation pivotante (64) est formée de façon à définir un axe pivotant (B-B) qui repose sur un plan perpendiculaire à l'axe de direction central (C), espacé par une distance et non incident à l'axe de direction central (C).

12. Véhicule à moteur (4) selon l'une quelconque des revendications 3 à 10, dans lequel la première articulation pivotante (64) est formée de façon à définir l'axe pivotant qui est défini avant, l'axe pivotant (B-B) reposant sur un plan perpendiculaire à l'axe de direction central (C) et étant incident à l'axe de direction central (C).

13. Véhicule à moteur (4) selon l'une quelconque des revendications 3 à 10 ou 12, dans lequel les moyens de roto-translation (68) comprennent une seconde bielle (96) présentant une première extrémité (98) articulée à la première bielle (60), au moyen d'une seconde articulation pivotante (100), parallèle à la première articulation pivotante (64), et une seconde extrémité (104) articulée à une bague (78) articulée à son tour à la barre de direction (40).

14. Véhicule à moteur (4) selon l'une quelconque des revendications 3 à 10 et 12 à 13, dans lequel les supports de direction latéraux (44, 48) définissent des bras de direction latéraux (108, 110) égaux l'un à l'autre, dans lequel la barre de direction (40) est formée de façon à intercepter un bras de direction central (112) présentant une longueur inférieure aux bras de direction latéraux (108, 110), lesdits bras de direction latéraux (108, 110) étant définis comme la distance entre chaque axe de direction latéral (L1, L2) et l'articulation latérale correspondante (52, 56), ledit bras de direction central (112) étant défini comme la distance entre les moyens de roto-translation (68) et l'axe de direction central (C).

15. Véhicule à moteur (4) selon la revendication 14, dans lequel les bras de direction latéraux (108, 110), avec des roues de direction avant (12, 16) en configuration droite, sont supérieurs au bras de direction central (112).

16. Véhicule à moteur (4) selon la revendication 14 ou 15, dans lequel la cinématique centrale (62) est formée de façon à varier la longueur du bras de direction central (112) lorsque l'angle de direction central (β) varie.

17. Véhicule à moteur (4) selon l'une quelconque des revendications précédentes, dans lequel le véhicule à moteur (4) comprend, sur le châssis avant (26), une structure quadrilatérale articulée, comprenant une paire d'éléments transversaux supérieurs et inférieurs (117, 118) reliés aux extrémités par des montants (119, 120) au moyen d'articulations latérales à roulement (122) qui définissent des axes de roulis latéraux (Y-Y) parallèles l'un à l'autre.

18. Véhicule à moteur (4) selon la revendication 17, dans lequel les éléments transversaux supérieur et inférieur (117, 118) sont articulés à leur tour au niveau d'une ligne centrale au cadre (24) au moyen d'articulations centrales à roulement (124) qui définissent des axes de roulis centraux (W-W), parallèles l'un à l'autre.

19. Véhicule à moteur (4) selon la revendication 18, dans lequel les axes de roulis latéraux (Y-Y) et les axes de roulis centraux (W-W) sont parallèles l'un à l'autre.
